# EUROPEAN PATENT SPECIFICATION

(11) **EP 4 394 963 B1**
(45) Date of publication and mention of the grant of the patent: **08.10.2025**
(21) Application number: 23173023.5
(22) Date of filing: 12.05.2023
(51) Int. Cl.: H01M 10/04, H01M 10/0587, H01M 50/107, H01M 50/179, H01M 50/533

(54) **CYLINDRICAL CELL AND ELECTRONIC DEVICE**
ZYLINDRISCHE ZELLE UND ELEKTRONISCHE VORRICHTUNG
CELLULE CYLINDRIQUE ET DISPOSITIF ÉLECTRONIQUE

(30) Priority: 29.12.2022 CN 202223570242 U
(43) Date of publication of application: 03.07.2024
(73) Proprietor: AESC Japan Ltd., Kanagawa, 2520012 (JP)
(72) Inventor: SHAN, Xueyan, Wuxi City, Jiangsu Province (CN)
(74) Representative: Becker, Eberhard

(56) References cited:
- CN-A- 114 284 570
- US-A1- 2005 260 487
- US-A1- 2006 281 252
- US-A1- 2014 308 554

## Description

### BACKGROUND

### Technical Field

The disclosure relates to the technical field of batteries, in particular to a cylindrical cell and an electronic device.

### Description of Related Art

Characterized in high energy density, high safety and low cost, cylindrical cell is now an important topic for research in the field of new energy power batteries. A cylindrical cell includes a housing, a electrode assembly, an electrode pole and a cover plate. The housing is a cylindrical structure with one end open. The electrode assembly is arranged in the housing, the electrode pole is fixed on the end wall of the housing and is electrically connected with the first tab of the electrode assembly, and the cover plate seals the open end of the housing and is electrically connected with the second tab of the electrode assembly.

The electrode assembly of existing cylindrical cell includes a positive electrode sheet, a negative electrode sheet and a separator. One end of the positive electrode sheet is connected with a positive electrode tab, one end of the negative electrode sheet is connected with a negative electrode tab, and a certain number of positive electrode sheets, separators and negative electrode sheets are wound to form a electrode assembly after being stacked in a certain way. Then, the positive electrode tab assembly is shaped into a positive electrode tab by kneading, and the negative electrode tab assembly is shaped into a negative electrode tab by kneading. However, in the existing technology, since the tabs are not processed with cutting, and the kneading process is to shape the entire tab into a flat surface by using kneading rollers, the kneaded plane has high density. Since the entire end surface of the electrode assembly is covered by the kneaded tab, it is likely to cause difficulty in exhausting the cylindrical cell and poor electrolyte infiltration, which affect the reliability of the cylindrical cell.
Patent applications US 2005/260487 A1 and CN 114 284 570 A disclose a cylindrical battery and concentrate on solving the problem of blocking electrolyte infiltration.

In light of the above, it is an urgent issue to provide a cylindrical cell to solve the above problems.

### SUMMARY

A purpose of the present disclosure is to provide a cylindrical cell, the low density of the tab of the electrode assembly facilitates infiltration of the electrolyte and exhaust rate of the gas, improves the reliability of the cell.

Another purpose of the present disclosure is to provide an electronic device, and the reliability and stability of the electronic device are good through use of the above-mentioned cylindrical cell.

The scope of the invention is defined by appended claim 1. In order to achieve the above purpose, the following technical solutions are provided:

In the first aspect, a cylindrical cell is provided, which includes: a housing, which includes an end wall and a surrounding wall enclosing the peripheral side of the end wall; an electrode pole, which penetrates through the end wall and is fixed to the end wall in an insulated manner; an electrode assembly, which is arranged in the housing, the electrode assembly includes an electrode assembly body and a first tab, the first tab is located at the first end of the electrode assembly body facing the electrode pole, the orthographic projection of the first tab on the first end of the electrode assembly body is the first tab region, and the distance between any point on the outer boundary of the first tab region and the inner side of the surrounding wall is L1, a radius of the inner side of the surrounding wall is R0, and the ratio of L1 to R0 ranges from 0.3 to 0.7.

In an optional solution of the cylindrical cell, the area of the first tab region is S1, the area of the end portion of the electrode assembly body is S0, and the ratio of S1 to S0 is in the range of 0.3 to 0.5.

In an optional solution for the cylindrical cell, the cylindrical cell further includes a connecting piece, and the connecting piece is arranged between the electrode pole and the first tab to electrically connect the electrode pole and the first tab.

In an optional solution for the cylindrical cell, the orthographic projection area of the connecting piece on the first end of the electrode assembly body is S2, and S2≤S1.

In an optional solution for the cylindrical cell, a liquid injection hole is provided on the electrode pole.

In an optional solution for the cylindrical cell, the distance between any point on the inner boundary of the first tab region and the centerline of the electrode assembly body is L2, and the ratio of L2 to R0 ranges from 0.1 to 0.4.

In an optional solution for the cylindrical cell, the number of turns of the electrode assembly body is N, with the innermost turn being the first turn, and the outermost turn being the Nth turn, the first tab region is located between 1/10 N turns and 2/5 N turns of the electrode assembly body.

In an optional solution of the cylindrical cell, the cylindrical cell further includes a cover plate, and the cover plate is fixed to one end of the surrounding wall away from the end wall.

In an optional solution for the cylindrical cell, the electrode assembly further includes a second tab, the second tab is arranged at the second end of the electrode assembly body close to the cover plate, and the second tab is directly and electrically connected to the cover plate, and the cover plate is electrically connected with the surrounding wall.

In an optional solution for the cylindrical cell, the orthographic projection of the second tab on the electrode assembly body is a second tab region, and the distance between any point on the inner boundary of the second tab region and the centerline of the electrode assembly body is L3, and the ratio of L3 to R0 ranges from 0.5 to 0.8.

In an optional solution for the cylindrical cell, the number of turns of the electrode assembly body is N, with the innermost turn being the first turn, and the outermost turn being the Nth turn, the second tab region is located between 1/2 N turns and N turns of the electrode assembly body.

In a second aspect, an electronic device is provided, which includes the above-mentioned cylindrical cell.

Compared with the related art, the advantageous effects of the present disclosure are as follows:

The cylindrical cell provided by the present disclosure includes a housing, which includes an end wall and a surrounding wall enclosing the end wall; an electrode pole, which penetrates through the end wall and is connected to the end wall in an insulated manner; and a electrode assembly, which is arranged in the housing, and the electrode assembly includes a electrode assembly body and a first tab, the first tab is located at the first end of the electrode assembly body facing the electrode pole, the orthographic projection of the first tab on the first end of the electrode assembly body is the first tab region, and the distance between any point on the outer boundary of the first tab region and the inner side of the surrounding wall is L1, a radius of the inner side of the surrounding wall is R0, and the ratio of L1 to R0 ranges from 0.3 to 0.7. The first tab structure of the electrode assembly is cut to concentrate the first tab of the electrode assembly in the region of the electrode assembly body close to the centerline of the electrode assembly body. On the one hand, it is possible to reserve partial region of the end surface of the electrode assembly that is not covered by the kneaded tab, thereby improving the infiltration rate of the electrolyte and the exhaust rate of the gas generated inside the electrode assembly; on the other hand, by cutting unwanted tabs, the weight of the electrode assembly itself may be reduced, which helps to achieve lightweight design of cylindrical batteries.

In the electronic device provided by the disclosure, the reliability and stability of the electronic device are good through use of the above-mentioned cylindrical cell.

### BRIEF DESCRIPTION OF THE DRAWINGS

In order to more clearly illustrate the technical solutions in the embodiments of the present disclosure, the accompanying drawings that need to be used in the description of the embodiments of the present disclosure will be briefly described below. Clearly, the accompanying drawings in the following description are only some embodiments of the present disclosure. For those skilled in the art, other drawings can also be obtained according to the content of the embodiment and these drawings of the present disclosure without any inventive effort.
FIG. 1 is a cross-sectional diagram of the first type of cylindrical cell provided in an embodiment of the present disclosure.
FIG. 2 is a schematic diagram of the first tab region of the first type of cylindrical cell provided in an embodiment of the present disclosure.
FIG. 3 is a schematic diagram of the second tab region of the first type of cylindrical cell provided in an embodiment of the present disclosure.
FIG. 4 is a cross-sectional diagram of the second type of cylindrical cell provided in an embodiment of the present disclosure.
FIG. 5 is a schematic structural diagram of the electrode pole end of the second type of cylindrical cell provided in an embodiment of the present disclosure.
FIG. 6 is a schematic diagram of the first tab region of the second type of cylindrical cell provided in an embodiment of the present disclosure.
FIG. 7 is a cross-sectional diagram of the third type of cylindrical cell provided in an embodiment of the present disclosure.
FIG. 8 is a schematic diagram of the second tab region of the third type of cylindrical cell provided in an embodiment of the present disclosure.

### DESCRIPTION OF THE EMBODIMENTS

In order to better describe the technical problem to be solved by the disclosure, the adopted technical solution and the achieved technical effect, the technical solution of the disclosure will be further described below in conjunction with the accompanying drawings and through specific implementation methods.

In the description of the present disclosure, unless otherwise clearly specified and limited, the terms "connected", "linked" and "fixed" should be understood in a broad sense, for example, the above terms may refer to a fixed connection, a detachable connection, or integral formation; mechanical or electrical connection; direction connection or indirect connection through an intermediary; or the internal communication of two components or the interaction relationship between two components. Those of ordinary skill in the art can understand the specific meanings of the above terms in the present disclosure in specific situations.

In the present disclosure, unless otherwise clearly specified and limited, a first feature being "on" or "below" a second feature may indicate direct contact between the first and second features, and may also indicate that the first and second features are not in direct contact but are in indirect contact through another feature between them. Moreover, the first feature being "above", "over" and "on" the second feature indicates that the first feature is directly above and obliquely above the second feature, or merely indicates that the first feature is at a level higher than the second feature. The first feature being "below", "beneath" and "under" the second feature indicates that the first feature is directly below and obliquely below the second feature, or simply means that the first feature is at a level lower than the second feature.

In the description of the present disclosure, the orientation or positional relationship of the terms "upper", "lower", "left", "right" is interpreted based on the orientation or positional relationship shown in the accompanying drawings, and are only for the convenience of description and simplification of operation. It does not indicate or imply that the device or element referred to must have a specific orientation, be constructed and operate in a specific orientation, and therefore should not be construed as limitation to the present disclosure. In addition, the terms "first" and "second" are only used for discrimination in description, and have no special meaning.

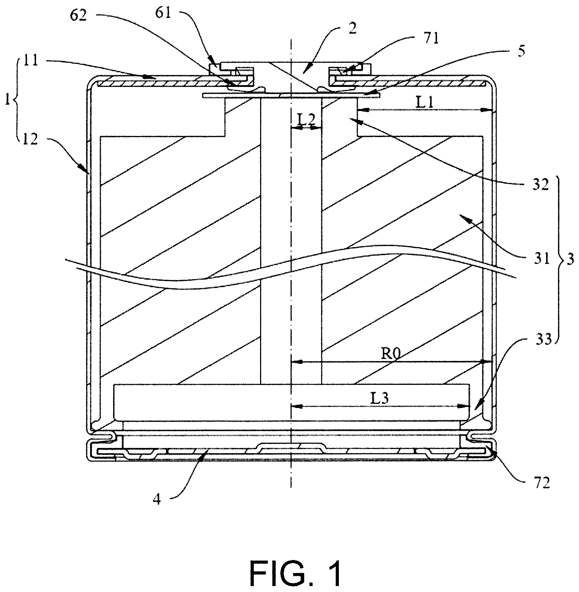

FIG. 1 shows a cross-sectional view of the first type of cylindrical cell provided in the present disclosure. As shown in FIG. 1, the cylindrical cell includes a housing 1, an electrode pole 2, an electrode assembly 3, a cover plate 4, a connecting piece 5, a first insulating member 61, a second insulating member 62, a first sealing member 71 and a second sealing member 72. The housing 1 includes an end wall 11 and a surrounding wall 12 enclosing the peripheral side of the end wall 11; the electrode pole 2 passes through the end wall 11 and is fixed to the end wall 11 in an insulated manner; the electrode assembly 3 is arranged in the housing 1, and the electrode assembly 3 is electrically connected to the electrode pole 2 through the connecting piece 5; and the cover plate 4 is fixed on one end of the surrounding wall 12 away from the end wall 11. The electrode pole 2 is riveted and fixed to the end wall 11. A first sealing member 71 and a first insulating member 61 are provided between the upper end of the electrode pole 2 and the outer surface of the end wall 11. The first sealing member 71 encloses the peripheral side of the electrode pole 2, the first insulating member 61 encloses the peripheral side of the first sealing member 71, and a second insulating member 62 is provided between the lower end of the electrode pole 2 and the inner surface of the end wall 11 to ensure the insulated connection between the electrode pole 2 as well as the connecting piece 5 and the housing 1. The packaging process of the housing 1 and the cover plate 4 may be as follows: one end of the surrounding wall 12 of the housing 1 away from the end wall 11 is subjected to a roll-grooving treatment, then the second sealing member 72 covers the peripheral side of the cover plate 4, the assembly body of the cover plate 4 and the second sealing member 72 is placed in the roller groove, and finally the surrounding wall 12 of the housing 1 is bent inward and fixed on the cover plate 4 to complete the packaging of the housing 1.

Further referring to FIG. 1, the electrode assembly 3 includes an electrode assembly body 31, a first tab 32 and a second tab 33. The first tab 32 is arranged at the first end of the electrode assembly body 31 facing the electrode pole 2, and the first tab 32 is electrically connected to the electrode pole 2 through the connecting piece 5. The second tab 33 is disposed at the second end of the electrode assembly body 31 facing away from the electrode pole 2, and the second tab 33 is electrically connected to the surrounding wall 12 of the housing 1. Exemplarily, the first tab 32 is a positive electrode tab, and the second tab 33 is a negative electrode tab. It should be noted that the processing technology of the electrode assembly 3 is as follows: the electrode assembly 3 is formed by winding the first electrode, the second electrode and the separator between the first electrode and the second electrode around the winding axis. The first electrode and the second electrode respectively include a first uncoated region and a second uncoated region that are not coated with an active material layer along the winding direction, and the first uncoated region and the second uncoated region are respectively located on the two end surfaces of the electrode assembly. The first tab 32 is formed by the first uncoated region, and the second tab 33 is formed by the second uncoated region.

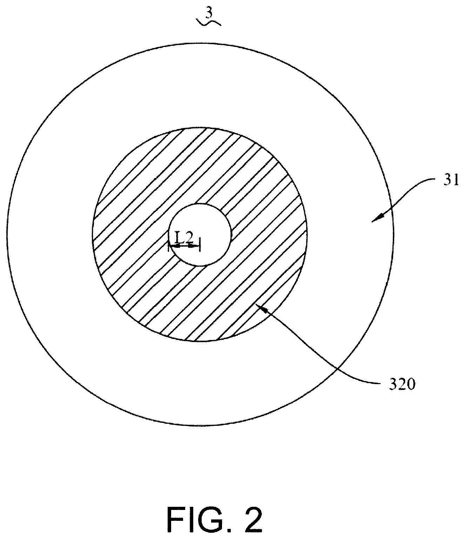

FIG. 2 shows a schematic diagram of the first tab region 320 of the first type of cylindrical cell provided in the present disclosure. As shown in FIG. 2 in conjunction with FIG. 1, the orthographic projection of the first tab 32 at the first end of the electrode assembly body 31 is the first tab region 320, and a distance between any point on the outer boundary of the first tab region 320 and the inner side of the surrounding wall 12 is L1; the radius of the inner side of the surrounding wall 12 is R0, and the ratio of L1 to R0 ranges from 0.3 to 0.7. It is worth noting that when the ratio of L1 to R0 is greater than 0.7, the area occupied by the first tab region 320 is too small, and which causes the following defects. First, the overcurrent capability of the cell is reduced, making it impossible to realize high-power discharging. Secondly, if the tab region is too small, the resistance of the corresponding tab will be large, and there will be a lot of heat generated at the tab during the cell discharge process, which is likely to cause cell thermal runaway. When the ratio of L1 to R0 is less than 0.3, the first tab region 320 almost covers the position close to the housing 1, which hinders infiltration of the electrolyte. The first tab structure of the electrode assembly 3 is cut, and the first tab 32 of the electrode assembly 3 is concentrated in the region of the electrode assembly body 31 close to the centerline of the electrode assembly body 31. On the one hand, it is possible to reduce the density of the first tab 32 and improve the infiltration rate and exhaust rate of the electrode assembly 3; on the other hand, it is possible to reduce the weight of the electrode assembly 3 itself to facilitate lightweight design of the cylindrical cell. It should be noted that in the related art, it is generally necessary to knead/bend the tab before connecting the tab to the connecting piece 5. The tab region mentioned in this disclosure is the region where the orthographic projection is formed on the electrode assembly body 31 after the tab is kneaded/bent. For example, the first tab region 320 is the orthographic projection region formed on the end surface of the electrode assembly body 31 after the first tab 32 is kneaded/bent, and the second tab region 330 is the orthographic projection region formed on the end surface of the electrode assembly body 31 after the second tab 33 is kneaded/bent.

Further referring to FIG. 2, the area of the first tab region 320 is S1, the area of the end portion of the electrode assembly body 31 is S0, and the ratio of S1 to S0 is in the range of 0.3 to 0.5. It is worth noting that when the ratio of S1 to S0 is within 0.3 to 0.5, not only that it is possible to ensure overcurrent, but also it may be ensured that the area of the end surface of the electrode assembly 3 not covered by the tab region is large enough to facilitate infiltration of electrolyte. In order to further reduce the weight of the cylindrical cell, the orthographic projection area of the connecting piece 5 on the end surface of the electrode assembly body 31 is S2, and S2≤S1. Such arrangement not only makes it possible to realize the welding and fixing of the first tab 32 and the connecting piece 5, but also reduce the size of the connecting piece 5 and decrease the weight of the connecting piece 5. Exemplarily, the shape of the connecting piece 5 is circular, one end surface of the connecting piece 5 is welded and fixed to the end surface of the electrode pole 2, and the other end surface thereof is welded and fixed to the first tab 32. The welding process of the connecting piece 5 may be as follows: first, the connecting piece 5 is welded to the first tab 32 of the electrode assembly 3, then the electrode assembly 3 is loaded into the housing 1, a welding rod passes through the middle hole of the electrode assembly 3, and the connecting piece 5 and the electrode pole 2 are welded and fixed by using a torque welding process.

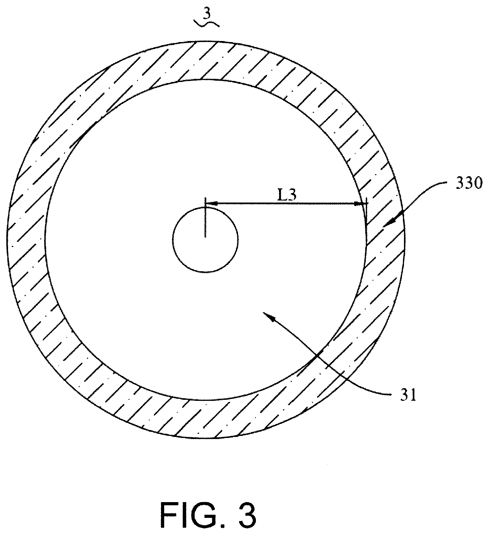

FIG. 3 shows a schematic diagram of the second tab region 330 of the first type of cylindrical cell provided in the present disclosure. As shown in FIG. 3 in conjunction with FIG. 1, the orthographic projection of the second tab 33 at the second end of the electrode assembly body 31 is the second tab region 330, and a distance between any point on the inner boundary of the second tab region 330 and the centerline of the electrode assembly body 31 is L3; the radius of the inner side of the surrounding wall 12 is R0, and the ratio of L3 to R0 ranges from 0.5 to 0.8. The second tab structure of the electrode assembly 3 is cut, and the second tab 33 of the electrode assembly 3 is concentrated in the region of the electrode assembly body 31 away from the centerline of the electrode assembly body 31. On the one hand, it is possible to reduce the density of the second tab 33 and improve the infiltration rate and exhaust rate of the electrode assembly 3; on the other hand, it is possible to reduce the weight of the electrode assembly 3 itself to facilitate lightweight design of the cylindrical cell.

The number of turns of the electrode assembly body 31 is N, with the innermost turn being the first turn and the outermost turn being the Nth turn, the second tab region 330 is located at 1/2 N turns to N turns of the electrode assembly body 31. Exemplarily, when N=2n, n is a positive integer, the second tab region 330 may be set in the interval of n to 2n turns of the electrode assembly body 31. When N ≠ 2n, n is a positive integer, 1/2 N is rounded off to obtain a positive integer, and the second tab region 330 falls within 1/2 N turns and N turns of the electrode assembly body 31. In FIG. 3, the second tab region 330 of the electrode assembly 3 is located between 1/2 N turns and N turns of the electrode assembly body 31, and the distance between any point on the outer boundary of the second tab region 330 and the outer side wall of the electrode assembly body 31 is 0. The second tab 33 is concentrated on one side close to the surrounding wall 12 of the housing 1, so that the second tab 33 can be directly welded to the surrounding wall 12 of the housing 1 to ensure the stability of the cylindrical cell.

In the cylindrical cell, on the one hand, both ends of the electrode assembly body 31 have areas not covered by the tab, so that it is possible to increase the infiltration rate and exhaust rate of the electrode assembly 3. On the other hand, half-tab and no-tab designs help to reduce the weight of the electrode assembly to optimize the structure of the cylindrical cell and improve the density of energy.

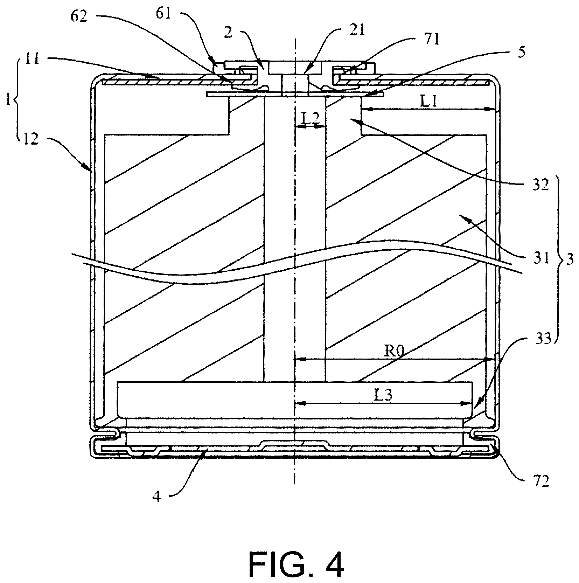

FIG. 4 shows a schematic cross-sectional view of the second type of cylindrical cell provided in the disclosure. As shown in FIG. 4, the cylindrical cell includes a housing 1, an electrode pole 2, an electrode assembly 3, a cover plate 4, connecting piece 5, a first insulating member 61, a second insulating member 62, a first sealing member 71 and a second sealing member 72. The housing 1 includes an end wall 11 and a surrounding wall 12 enclosing the end wall 11; the electrode pole 2 passes through the end wall 11 and is connected to the end wall 11 in an insulated manner; the electrode assembly 3 is arranged in the housing 1, and the electrode assembly 3 is electrically connected to the electrode pole 2 through the connecting piece 5; and the cover plate 4 is fixed on one end of the surrounding wall 12 away from the end wall 11. The electrode pole 2 is riveted and fixed to the end wall 11. A first sealing member 71 and a first insulating member 61 are provided between the upper end of the electrode pole 2 and the outer surface of the end wall 11. The first sealing member 71 encloses the peripheral side of the electrode pole 2, the first insulating member 61 encloses the peripheral side of the first sealing member 71, and a second insulating member 62 is provided between the lower end of the electrode pole 2 and the inner surface of the end wall 11 to ensure the insulated connection between the electrode pole 2 and the housing 1. The packaging process of the housing 1 and the cover plate 4 may be as follows: one end of the surrounding wall 12 of the housing 1 away from the end wall 11 is subjected to a roll-grooving treatment, then the second sealing member 72 covers the peripheral side of the cover plate 4, the assembly body of the cover plate 4 and the second sealing member 72 is placed in the roller groove, and finally the surrounding wall 12 of the housing 1 is bent inward and fixed on the cover plate 4 to complete the packaging of the housing 1. The electrode assembly 3 includes an electrode assembly body 31, a first tab 32 and a second tab 33. The first tab 32 is located at the first end of the electrode assembly body 31 facing the electrode pole 2, the first tab 32 is electrically connected to the electrode pole 2 through connecting piece 5, the second tab 33 is located at the second end of the electrode assembly body 31 facing away from the electrode pole 2, and the second tab 33 is electrically connected to the surrounding wall 12 of the housing 1.

The packaging process of the second type of cylindrical cell in FIG. 4 is the same as that of the cover plate 4 of the first type of cylindrical cell in FIG. 1, and details will not be repeated here. The main difference between the two is that in FIG. 4, the electrode pole 2 is provided with a liquid injection hole 21 through which the electrolyte is injected into the housing 1. The liquid injection process of the second type of cylindrical cell may be as follows: first, the electrode pole 2 is riveted on the end wall 11 of the housing 1, and then assembly body of the electrode assembly 3 and the connecting piece 5 are loaded, and after the cover plate 4 is packaged, the electrolyte is injected into the liquid injection hole 21 of the electrode pole 2, and finally the liquid injection hole 21 is sealed by a sealing nail.

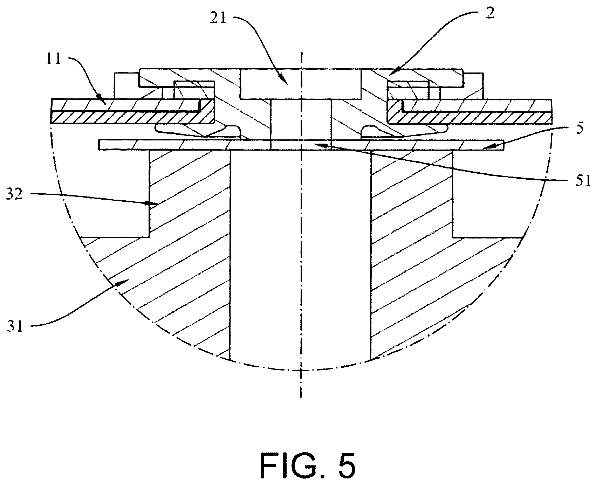

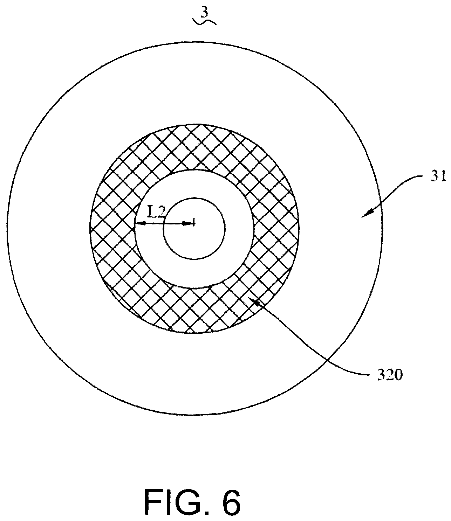

FIG. 5 shows a partial schematic diagram of the electrode pole 2 end of the cylindrical cell in FIG. 4. FIG. 6 shows a schematic diagram of the first tab region 320 of the cylindrical cell in FIG. 4. As shown in FIG. 5 to FIG. 6, the distance between any point on the inner boundary of the first tab region 320 and the centerline of the electrode assembly body 31 is L2, and the ratio of L2 to R0 ranges from 0.1 to 0.4. Such setting makes the first tab 32 of the electrode assembly 3 deviate from the liquid injection hole 21, so that the electrolyte is able to quickly flow into the electrode assembly 3 and increase the infiltration rate of the electrode assembly 3. The liquid injection method of the cylindrical cell in FIG. 1 is performed by injecting liquid on the cover plate 4 side of the housing 1, and the cover plate 4 is packaged after liquid injection. Therefore, the distance L2 between any point on the inner boundary of the first tab region 320 of the electrode assembly 3 of the cylindrical cell in FIG. 1 and the centerline of the electrode assembly body 31 is equal to the radius of the middle hole in the electrode assembly 3. Of course, in the embodiment of FIG. 1, the distance L2 between any point on the inner boundary of the first tab region 320 and the centerline of the electrode assembly body 31 may also be set to be greater than the radius of the middle hole in the electrode assembly 3, so as to increase the path for infiltration of electrolyte.

Further, the connecting piece 5 is provided with a through hole 51 corresponding to the liquid injection hole 21, so that the electrolyte is able to flow into the electrode assembly 3 through the through hole 51. In addition, in order to facilitate the welding and fixing of the connecting piece 5 and the electrode pole 2, the diameter of the through hole 51 of the connecting piece 5 is smaller than the diameter of the middle hole of the electrode assembly 3, and the diameter of the end surface of the electrode pole 2 facing the connecting piece 5 is greater than the diameter of the through hole 51 of the connecting piece 5.

Further referring to FIG. 6, the number of turns of the electrode assembly body 31 is N, with the innermost turn being the first turn and the outermost turn being the Nth turn, the first tab region 320 is located between 1/10 N turns and 2/5 N turns of the electrode assembly body 31. Preferably, the first tab region 320 is located between 1/3 N turns to 2/3 N turns of the electrode assembly body 31. Exemplarily, when N=3n, n is a positive integer, the first tab region 320 may be set in the interval of n to 2n turns of the electrode assembly body 31. When N≠3n, n is a positive integer, 1/3 N and 2/3 N are rounded to obtain positive integers, and the first tab region 320 is located between 1/3 N turns and 2/3 N turns of the electrode assembly body 31.

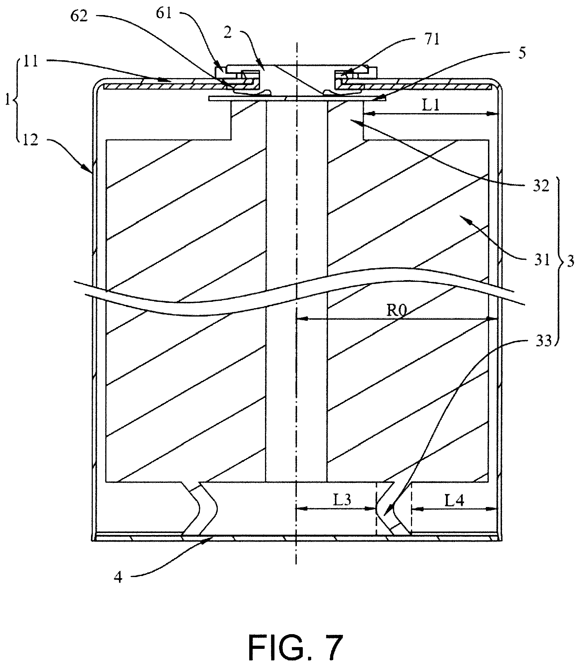

FIG. 7 shows a schematic cross-sectional view of the third type of cylindrical cell provided in the present disclosure. As shown in FIG. 7, the third type of cylindrical cell includes a housing 1, an electrode pole 2, an electrode assembly 3, a cover plate 4, a connecting piece 5, a first insulating member 61, a first sealing member 71 and a second sealing member 72. The housing 1 includes an end wall 11 and a surrounding wall 12 enclosing the end wall 11; the electrode pole 2 passes through the end wall 11 and is connected to the end wall 11 in an insulated manner; the electrode assembly 3 is arranged in the housing 1, and the electrode assembly 3 is electrically connected to the electrode pole 2 through the connecting piece 5; and the cover plate 4 is fixed on one end of the surrounding wall 12 away from the end wall 11. The electrode pole 2 is riveted and fixed to the end wall 11. A first sealing member 71 and a first insulating member 61 are provided between the upper end of the electrode pole 2 and the outer surface of the end wall 11. The first sealing member 71 encloses the peripheral side of the electrode pole 2, the first insulating member 61 encloses the peripheral side of the first sealing member 71, and a second insulating member 62 is provided between the lower end of the electrode pole 2 and the inner surface of the end wall 11 to ensure the insulated connection between the electrode pole 2 as well as the connecting piece 5 and the housing 1. The packaging process of the housing 1 and the cover plate 4 may be as follows: the cover plate 4 is welded and fixed to the surrounding wall 12 of the housing 1. The electrode assembly 3 includes an electrode assembly body 31, a first tab 32 and a second tab 33. The first tab 32 is located at the first end of the electrode assembly body 31 facing the electrode pole 2, the first tab 32 is electrically connected to the electrode pole 2 through a connecting piece 5, the second tab 33 is located at the second end of the electrode assembly body 31 facing away from the electrode pole 2, and the second tab 33 is electrically connected to the cover plate 4.

The liquid injection process of the third type of cylindrical cell in FIG. 7 is the same as that of the second type of cylindrical cell in FIG. 4, and the liquid injection is realized by providing a liquid injection hole 21 on the electrode pole 2, the details will not be repeated here. The main difference between the two is that in FIG. 7, the cover plate 4 is directly and electrically connected to the second tab 33 of the electrode assembly 3, and then the cover plate 4 is welded and fixed to the surrounding wall 12 of the housing 1.

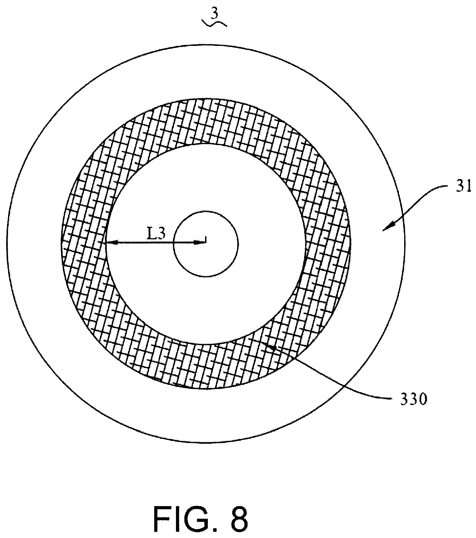

FIG. 8 shows a schematic diagram of the second tab region 330 of the cylindrical cell in FIG. 7. As shown in FIG. 8 combined with FIG. 7, the orthographic projection of the second tab 33 at the second end of the electrode assembly body 31 is the second tab region 330, and a distance between any point on the inner boundary of the second tab region 330 and the centerline of the electrode assembly body 31 is L3; the radius of the inner side of the surrounding wall 12 is R0, and the ratio of L3 to R0 ranges from 0.5 to 0.8. The distance between the outer boundary of the second tab region 330 and the inner side of the surrounding wall 12 is L4, and the ratio of L4 to R0 ranges from 0.2 to 0.4. In this way, the second tab 33 of the electrode assembly 3 may be concentrated at a position toward the outside from the center of the electrode assembly body 31, so as to facilitate the welding and fixing of the second tab 33 and the cover plate 4.

Of course, the form of electrical connection between the second tab 33 of the electrode assembly 3 and the housing 1 is not limited to the above examples. In other embodiments, it might be that the cylindrical cell further includes a negative electrode connecting piece, the negative electrode tab 33 is electrically connected to the negative electrode connecting piece, and the negative electrode connecting piece is electrically connected to the housing 1.

The present disclosure further provides an electronic device, which includes the cylindrical cell. By using the cylindrical cell, the electronic device has high energy density and stable performance, and may improve user experience.

Optionally, the electronic device may be a power cell of a new energy vehicle, a new energy storage device, an electronic product, etc., which will not be described here in details.

Note that in the description of this present invention, some expressions such as "some embodiments", "other embodiments" and the like mean that the specific features, structures, materials or characteristics described in conjunction with the embodiments or examples are included in at least one embodiment or example of the invention In this present invention, schematic expression of the above terms do not necessarily refer to the same embodiment or example. Furthermore, the particular features, structures, materials or characteristics described may be combined in any suitable manner in any one or more embodiments or examples, as long as they fall within the scope of the appended claim 1.

## Claims

1. A cylindrical cell, comprising:
a housing (1), having an end wall (11) and a surrounding wall (12) enclosing a peripheral side of the end wall (11);
an electrode pole (2), penetrating through the end wall (11) and being fixed to the end wall (11) in an insulated manner;
an electrode assembly (3), disposed in the housing (1), wherein the electrode assembly (3) comprises a electrode assembly body (31) and a first tab (32), the first tab (32) is located at a first end of the electrode assembly body (31) facing the electrode pole (2), an orthographic projection of the first tab (32) on the first end of the electrode assembly body (31) is a first tab region (320), and a distance between any point on an outer boundary of the first tab region (320) and an inner side of the surrounding wall (12) is L1, a radius of the inner side of the surrounding wall (12) is R0, and a ratio of L1 to R0 ranges from 0.3 to 0.7.

2. The cylindrical cell according to claim 1, wherein an area of the first tab region (320) is S1, an area of an end portion of the electrode assembly body (31) is S0, and a ratio of S1 to S0 is in a range of 0.3 to 0.5.

3. The cylindrical cell according to claim 1 or 2, wherein the cylindrical cell further comprises a connecting piece (5), and the connecting piece (5) is disposed between the electrode pole (2) and the first tab (32) to electrically connect the electrode pole (2) and the first tab (32).

4. The cylindrical cell according to any one of claims 1 to 3, wherein an orthographic projection area of the connecting piece (5) on the first end of the electrode assembly body (31) is S2, and S2≤S1.

5. The cylindrical cell according to any one of claims 1 to 4, wherein the electrode pole (2) comprises a liquid injection hole (21).

6. The cylindrical cell according to any one of claims 1 to 5, wherein a distance between any point on an inner boundary of the first tab region (320) and a centerline of the surrounding wall (12) is L2, and a ratio of L2 to R0 ranges from 0.1 to 0.4.

7. The cylindrical cell according to any one of claims 1 to 6, wherein the number of turns of the electrode assembly body (31) is N, with an innermost turn being a first turn, and an outermost turn being a Nth turn, the first tab region (320) is located between 1/10 N turns and 2/5 N turns of the electrode assembly body (31).

8. The cylindrical cell according to any one of claims 1 to 7, wherein the cylindrical cell further comprises a cover plate (4), and the cover plate (4) is fixed to one end of the surrounding wall (12) away from the end wall (11).

9. The cylindrical cell according to any one of claims 1 to 8, wherein the electrode assembly (3) further comprises a second tab (33), the second tab (33) is disposed at a second end of the electrode assembly body (31) close to the cover plate (4), and the second tab (33) is directly and electrically connected to the cover plate (4), and the cover plate (4) is electrically connected with the surrounding wall (12).

10. The cylindrical cell according to any one of claims 1 to 9, wherein an orthographic projection of the second tab (33) on the electrode assembly body (31) is a second tab region (330), and a distance between any point on an inner boundary of the second tab region (330) and a centerline of the electrode assembly body (31) is L3, and a ratio of L3 to R0 ranges from 0.5 to 0.8;
the number of turns of the electrode assembly body (31) is N, with the innermost turn being the first turn, and the outermost turn being the Nth turn, the second tab region (330) is located between 1/2 N turns and N turns of the electrode assembly body (31).

11. An electronic device, comprising the cylindrical cell according to any one of claims 1 to 10.

## Patentansprüche

1. Zylindrische Zelle, umfassend:
ein Gehäuse (1) mit einer Stirnwand (11) und einer die Stirnwand (11) umschließenden Ummantelungswand (12);
einen Elektrodenpol (2), der die Stirnwand (11) durchdringt und auf isolierte Weise an der Stirnwand (11) befestigt ist;
eine Elektrodenanordnung (3), die im Gehäuse (1) angeordnet ist, wobei die Elektrodenanordnung (3) einen Elektrodenanordnungskörper (31) und einen ersten Streifen (32) umfasst, wobei der erste Streifen (32) an einem dem Elektrodenpol (2) zugewandten ersten Ende des Elektrodenanordnungskörpers (31) angeordnet ist, wobei eine orthographische Projektion des ersten Streifens (32) auf das erste Ende des Elektrodenanordnungskörpers (31) einen ersten Streifenbereich (320) bildet und wobei der Abstand zwischen einem beliebigen Punkt an der Außengrenze des ersten Streifenbereichs (320) und der Innenseite der Ummantelungswand (12) L1 beträgt, wobei ein Radius der Innenseite der Ummantelungswand (12) R0 ist und ein Verhältnis von L1 zu R0 zwischen 0,3 und 0,7 liegt.

2. Zylindrische Zelle nach Anspruch 1, wobei eine Fläche des ersten Streifenbereichs (320) S1 ist, eine Fläche eines Endabschnitts des Elektrodenanordnungskörpers (31) S0 ist und ein Verhältnis von S1 zu S0 im Bereich von 0,3 bis 0,5 liegt.

3. Zylindrische Zelle nach Anspruch 1 oder 2, wobei die zylindrische Zelle ferner ein Verbindungsstück (5) umfasst und das Verbindungsstück (5) zwischen dem Elektrodenpol (2) und dem ersten Streifen (32) angeordnet ist, um den Elektrodenpol (2) und den ersten Streifen (32) elektrisch zu verbinden.

4. Zylindrische Zelle nach einem der Ansprüche 1 bis 3, wobei eine orthographische Projektionsfläche des Verbindungsstücks (5) auf das erste Ende des Elektrodenanordnungskörpers (31) S2 ist und S2 ≤ S1 gilt.

5. Zylindrische Zelle nach einem der Ansprüche 1 bis 4, wobei der Elektrodenpol (2) eine Flüssigkeitseinspritzöffnung (21) aufweist.

6. Zylindrische Zelle nach einem der Ansprüche 1 bis 5, wobei ein Abstand zwischen einem beliebigen Punkt an der Innengrenze des ersten Streifenbereichs (320) und der Mittellinie der umgebenden Wand (12) L2 ist und ein Verhältnis von L2 zu R0 zwischen 0,1 und 0,4 liegt.

7. Zylindrische Zelle nach einem der Ansprüche 1 bis 6, wobei die Anzahl der Windungen des Elektrodenanordnungskörpers (31) N beträgt, wobei eine innerste Windung eine erste Windung ist und eine äußerste Windung eine N-te Windung ist, wobei der erste Streifenbereich (320) zwischen 1/10 N Windungen und 2/5 N Windungen des Elektrodenanordnungskörpers (31) angeordnet ist.

8. Zylindrische Zelle nach einem der Ansprüche 1 bis 7, wobei die zylindrische Zelle ferner eine Abdeckplatte (4) umfasst und wobei die Abdeckplatte (4) an einem Ende der Ummantelungswand (12) weg von der Stirnwand (11) befestigt ist.

9. Zylindrische Zelle nach einem der Ansprüche 1 bis 8, wobei die Elektrodenanordnung (3) ferner einen zweiten Streifen (33) umfasst, der zweite Streifen (33) an einem zweiten Ende des Elektrodenanordnungskörpers (31) nahe der Abdeckplatte (4) angeordnet ist und wobei der zweite Streifen (33) direkt und elektrisch mit der Abdeckplatte (4) verbunden ist und wobei die Abdeckplatte (4) elektrisch mit der Ummantelungswand (12) verbunden ist.

10. Zylindrische Zelle nach einem der Ansprüche 1 bis 9, wobei eine orthographische Projektion des zweiten Streifens (33) auf den Elektrodenanordnungskörper (31) einen zweiten Streifenbereich (330) bildet und wobei ein Abstand zwischen einem beliebigen Punkt an der Innengrenze des zweiten Streifenbereichs (330) und der Mittellinie des Elektrodenanordnungskörpers (31) L3 ist und ein Verhältnis von L3 zu R0 zwischen 0,5 und 0,8 liegt;
die Anzahl der Windungen des Elektrodenanordnungskörpers (31) N beträgt, wobei die innerste Windung die erste Windung ist und die äußerste Windung die N-te Windung ist, wobei der zweite Streifenbereich (330) zwischen 1/2 N Windungen und N Windungen des Elektrodenanordnungskörpers (31) angeordnet ist.

11. Elektronische Vorrichtung, umfassend die zylindrische Zelle nach einem der Ansprüche 1 bis 10.

## Revendications

1. Cellule cylindrique comprenant :
un boîtier (1) doté d'une paroi d'extrémité (11) et d'une paroi périphérique (12) renfermant un côté périphérique de la paroi d'extrémité (11) ;
un pôle d'électROde (2) traversant la paroi d'extrémité (11) et fixé à la paroi d'extrémité (11) de manière isolée ;
un ensemble d'électrodes (3), disposé dans le boîtier (1), dans lequel l'ensemble d'électrodes (3) comprend un corps d'ensemble d'électrodes (31) et une première languette (32), la première languette (32) est située à une première extrémité du corps d'ensemble d'électrodes (31) faisant face au pôle d'électrode (2), une projection orthogonale de la première languette (32) sur la première extrémité du corps d'ensemble d'électrodes (31) constitue une première zone de languette (320) et une distance entre tout point situé sur une limite extérieure de la première zone de languette (320) et un côté intérieur de la paroi périphérique (12) est L1, un rayon du côté intérieur de la paroi périphérique (12) est R0 et un rapport entre L1 et R0 est compris entre 0,3 et 0,7.

2. Cellule cylindrique selon la revendication 1, dans laquelle une surface de la première zone de languette (320) est S1, une surface d'une partie d'extrémité du corps d'ensemble d'électrodes (31) est S0 et le rapport entre S1 et S0 est compris entre 0,3 et 0,5.

3. Cellule cylindrique selon la revendication 1 ou 2, dans laquelle la cellule cylindrique comprend en outre une pièce de connexion (5) et la pièce de connexion (5) est disposée entre le pôle d'électrode (2) et la première languette (32) pour connecter électriquement le pôle d'électrode (2) et la première languette (32).

4. Cellule cylindrique selon une quelconque des revendications 1 à 3, dans laquelle la surface de projection orthogonale de la pièce de connexion (5) sur la première extrémité du corps d'ensemble d'électrodes (31) est S2, et S2≤S1.

5. Cellule cylindrique selon une quelconque des revendications 1 à 4, dans laquelle le pôle d'électrode (2) comprend un trou d'injection de liquide (21).

6. Cellule cylindrique selon une quelconque des revendications 1 à 5, dans laquelle une distance entre tout point situé sur une limite intérieure de la première zone de languette (320) et un axe central de la paroi périphérique (12) est L2 et un rapport L2/R0 est compris entre 0,1 et 0,4.

7. Cellule cylindrique selon une quelconque des revendications 1 à 6, dans laquelle le nombre de tours du corps d'ensemble d'électrodes (31) est N, un tour le plus interne étant un premier tour et un cinquième tour le plus externe étant un Nième tour, la première zone de languette (320) est située entre 1/10 N tours et 2/5 N tours du corps de l'ensemble d'électrodes (31).

8. Cellule cylindrique selon une quelconque des revendications 1 à 7, dans laquelle la cellule cylindrique comprend en outre une plaque de recouvrement (4) et la plaque de recouvrement (4) est fixée à une extrémité de la paroi périphérique (12) éloignée de la paroi d'extrémité (11).

9. Cellule cylindrique selon une quelconque des revendications 1 à 8, dans laquelle l'ensemble d'électrodes (3) comprend en outre une deuxième languette (33), la deuxième languette (33) est disposée à une deuxième extrémité du corps d'ensemble d'électrodes (31) à proximité de la plaque de recouvrement (4) et la deuxième languette (33) est directement et électriquement connectée à la plaque de recouvrement (4) et la plaque de recouvrement (4) est connectée électriquement à la paroi périphérique (12).

10. Cellule cylindrique selon une quelconque des revendications 1 à 9, dans laquelle une projection orthogonale de la deuxième languette (33) sur le corps d'ensemble d'électrodes (31) constitue une deuxième zone de languette (330) et une distance entre tout point situé sur une limite intérieure de la deuxième zone de languette (330) et un axe central du corps d'ensemble d'électrodes (31) est de L3 et le rapport entre L3 et R0 est compris entre 0,5 et 0,8 ;
le nombre de tours du corps d'ensemble d'électrises (31) est N, le tour le plus interne étant le premier tour et le tour le plus externe étant le Nième tour, la deuxième zone de languette (330) est située entre 1/2 N tours et N tours du corps d'ensemble d'électrodes (31).

11. Dispositif électronique comprenant la cellule cylindrique selon une quelconque des revendications 1 à 10.
